(19) Europäisches Patentamt

European Patent Office

Office européen des brevets

(11) EP 0 976 485 B1

(12) EUROPEAN PATENT SPECIFICATION

(45) Date of publication and mention
of the grant of the patent:
27.02.2002 Bulletin 2002/09

(51) Int Cl.7: B23D 51/10

(21) Application number: 99304997.2

(22) Date of filing: 24.06.1999

(54) **Saw blade clamp with cam for a compass saw**

Nockenartige Sägeblattspannvorrichtung für Stichsäge

Dispositif de serrage à came pour lame de scie sauteuse

(84) Designated Contracting States:
DE FR GB IT

(30) Priority: 02.07.1998 DE 19831222

(43) Date of publication of application:
02.02.2000 Bulletin 2000/05

(73) Proprietor: Black & Decker Inc.
Newark Delaware 19711 (US)

(72) Inventor: Eichberger, Gert
65824 Schwalbach (DE)

(74) Representative: Harries, Simon George et al
Black & Decker Patent Department 210 Bath
Road
Slough, Berkshire SL1 3YD (GB)

(56) References cited:
US-A- 4 615 247        US-A- 5 443 276

• G. SCHEFFERS: "Anwendung der Differential-
und Integralrechnung auf Geometrie, Erster
Band: Einführung in die Theorie der Kurven in
der Ebene und im Raume" 1923 , WALTER DE
GRUYTER & CO , BERLIN AND LEIPZIG
XP002117196 * page 101 - page 103, in particualr
page 102, line 23 - line 26; figure 34 *

## Description

The invention relates to a saw clamp for a compass saw or similar saw, having a blade seat, which comprises at least two adjacent bearing surfaces for two adjacent, axially extending surfaces of the saw blade shank, and also a stop surface for the rear end of the saw blade shank, and having a hand-operable clamping element, which is pivotable between a releasing position and a clamping position about an axis and which comprises a clamping surface extending eccentrically around the axis for engagement with an axially extending surface of the saw blade shank.

In the case of a known saw blade clamp of that kind (US-PS 5 443 276, EP 0 693 341 A1), the clamping element has a clamping surface which is in the form of a partial cylinder, that is, is curved in a circular arc shape, the clamping element being rotatable about an axis that is offset with respect to the axis of the cylinder. In this way, by rotating the clamping element by means of an externally accessible operating member, the circular arc-shaped clamping surface can be moved between a position in which it is in clamped engagement with a main lateral surface of the saw blade shank, and a released position, in which it is disengaged from the main lateral surface of the saw blade.

This form of the clamping surface is suitable for clamping the saw blade when the dimensions of the saw blade shank vary only within very narrow limits, and when the form and position of the clamping surface remain substantially unchanged throughout the life of the saw blade clamp. Otherwise, a satisfactory clamping action cannot be obtained, or alternatively the clamped engagement can be so tight that the user is not, or only with considerable difficulty, able to move the clamping element into the release position.

The aim of the invention is to improve a saw blade clamp such that it permits clamping of saw blade shanks of different dimensions, whilst keeping a clamping force of unvarying magnitude.

To solve that problem, a saw blade clamp of the kind mentioned in the introduction is configured in such way that the clamping surface is in the form of a spiral, the opening angle of which lies between 4° and 12°, the opening angle preferably being 8° to 11° and especially 10°.

By using a spiral clamping surface with the indicated opening angle of the spiral, on the one hand an effective and manageable clamping force is exerted on the shank of the clamped saw blade. If the opening angle were to be less than 4°, clamping can be such that the user would be virtually unable to release it, whereas with an opening angle of more than 12° there is a risk that the engagement between clamping surface and saw blade shank will not be effective, but the clamping surface will simply slide along the saw blade shank as the clamping element is rotated without producing an effective clamping force. On the other hand, for all shank dimensions that lie within the prescribed size range, in the clamping position of the clamping element the same angle of engagement is obtained between straight lines running through the axis of rotation of the clamping element, one of which lines runs perpendicular to the shank surface at which clamping takes place, and the other of which lines extends through the point of contact between spiral clamping surface and this shank surface. This included angle is the same as the opening angle of the spiral, and the same angle for all cases ensures that the same clamping force is effective in each case.

The clamping element is preferably in the form of a two-armed lever, on one arm of which the clamping surface is formed and the other arm of which forms an operating arm, by which the user is able manually to displace the clamping element.

In an especially preferred practical form, the clamping surface is arranged to be brought into engagement with a narrow side of the inserted saw blade shank. At the same time, it has been shown that saw blade shanks of a width between 5.8 mm and 7.2 mm can be clamped properly and uniformly without difficulty by means of the clamping element constructed according to the invention.

When the clamped engagement is effected at the narrow side of the inserted saw blade shank, it is advantageous to mould a groove of constant depth into the clamping surface, with which the saw blade shank then engages. With a constant depth of the groove, the effective form of the spiral is not changed, yet the groove effects additional positioning of the saw blade in the clamped state.

The bearing surfaces of the blade seat preferably form part of a receiving slot open towards the side of the clamping surface.

The clamping element can be spring-loaded towards the clamping position, so that when released it will always be urged into this clamping position, thus ensuring a stable operating state. The spring force acts to increase the clamping force, but in relation to the clamping force effective in operation is so small that it does not appreciably influence the clamping force. On the contrary, the clamping force is caused in practice only by the engagement between the spiral clamping surface and the shank of the saw blade, and by the tensile force that acts on the saw blade in operation.

The invention is explained in detail in the following with reference to the Figures showing an exemplary embodiment.

Figure 1     shows, in section, an electric tool in the form of a compass saw.

Figure 2     shows, in a partial view, the region of the saw blade clamp of the compass saw from Figure 1.

Figure 3     shows, in a diagrammatic partial view, the saw blade clamp with the saw blade inserted.

Figure 4    shows, in a view corresponding to Figure 3, the saw blade clamp with an inserted saw blade, the shank of which has a smaller width than the shank of the saw blade from Figure 3.

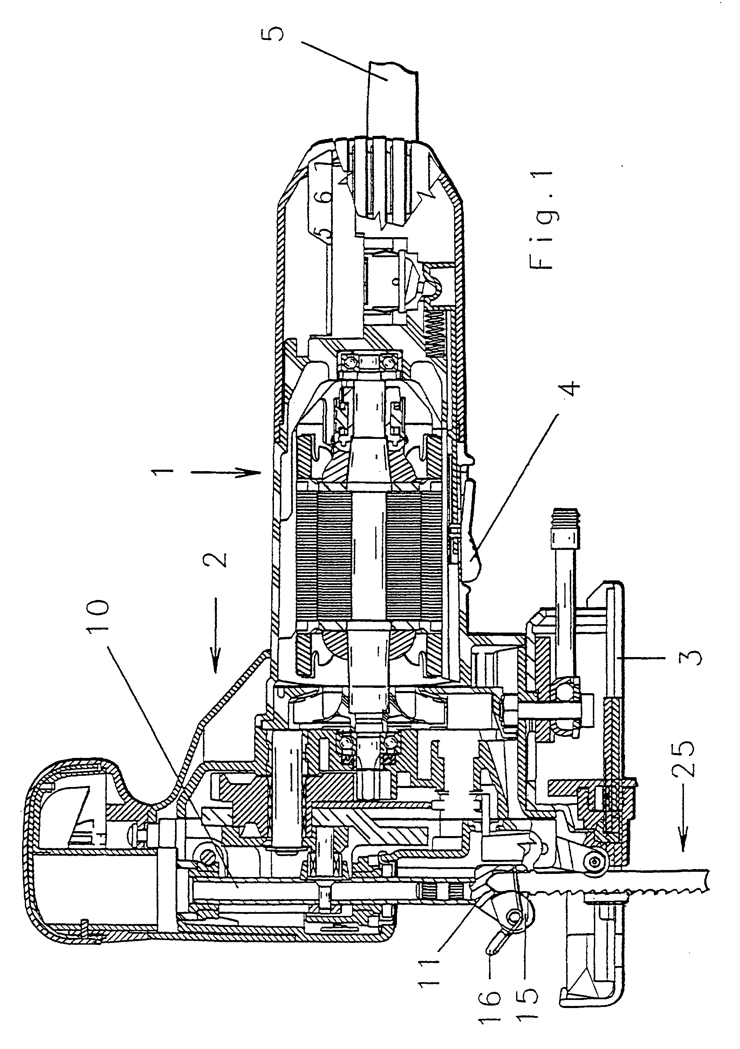

In a motor housing 1 forming part of the compass saw housing, the electrically operated compass saw illustrated in Figure 1 contains an electric motor, which is connected by the user by means of the operating switch 4 to a voltage source, which is connected to the compass saw by way of the cable led out of the compass saw through a protective sleeve 5 at the rear end thereof. The electric motor drives in the customary manner a gear provided in a section of the compass saw housing forming the gear housing 2; the gear is of the customary construction for compass saws and is used to move back and forth the customary plunger 10, which has the saw blade clamp at its lower end. Secured to the underside of the compass saw housing, there is a customary shoe 3, through which the saw blade 25 inserted into the saw blade clamp extends.

The overall construction of this compass saw is standard and is consequently not described.

In the lower end of the plunger 10 is inserted a blade seat 11, which for that purpose has a corrugated or knurled shank that is pressed into the lower end of the tubular plunger 10, so that the blade seat 11 sits, locked to prevent turning and axially immovable, in the plunger 10.

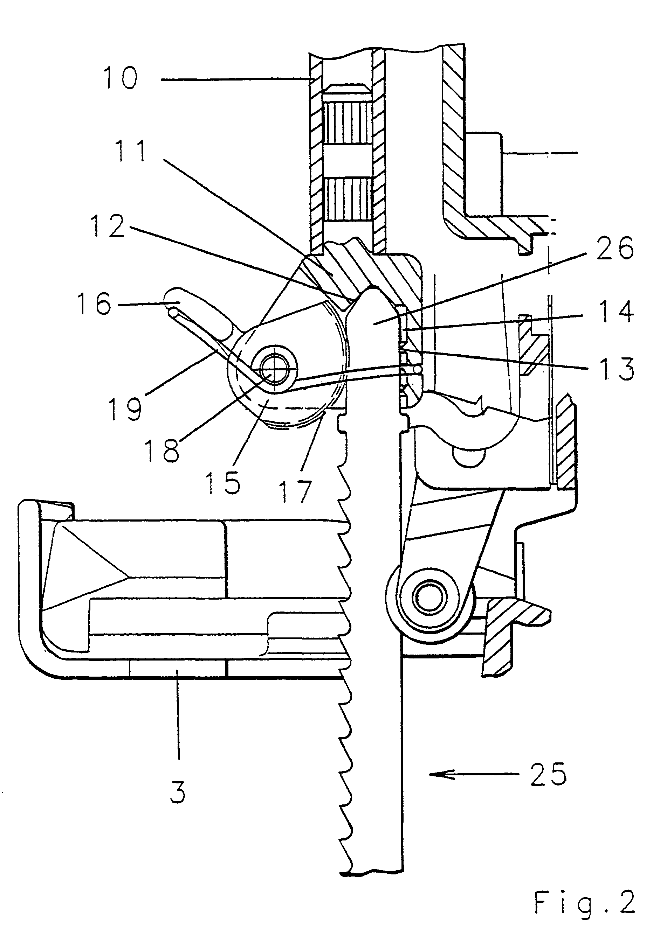

The blade seat 11 has a slot-shaped shank seat open in a downward direction, which has two opposing bearing surfaces, only the rear bearing surface 14 of which is shown in the Figures, whilst the opposing bearing surface is not illustrated in the Figures. These bearing surfaces are joined at the right-hand side in Figures 1 and 2 by a bearing surface 13. The bearing surface 14 and the bearing surface running parallel thereto, not illustrated, do not extend as far as the edge on the left-hand side in Figures 1 and 2 of the shank 26 of the compass saw blade 25. At the top end of the receiving slot formed, there is an approximately V-shaped bearing surface 12, with which the rear end of the shank 26 of the inserted compass saw blade 25 comes into supportive engagement.

On the side lying opposite the bearing surface 13, a clamping element 15 is fastened to the blade seat 11, which clamping element has an operating arm 16. This is arranged to pivot about an axis formed by a pivot pin 18, and has a spiral clamping surface 17 which faces the edge or narrow side of the shank 26 of the compass saw blade 25 on the left in the Figures 1 and 2. The distance r of the clamping surface from the axis of rotation of the clamping element 15 follows the mathematical definition of a spiral, taking into account the geometric attributes in the region of the blade clamp and taking into account the widths of shanks 26 of compass saw blades to be clamped, namely:
in which

$$r(\varphi) = \frac{B\left(-\dfrac{d_o}{B}\right)}{\cos\left(\dfrac{\alpha\pi}{180°}\right)} \cdot e^{2\pi \tan(\bullet)}$$
$$(\ast) = \left(\frac{\alpha\pi}{180°}\right)\cdot\left(\frac{\varphi - \alpha}{360°} - n\right)$$

and

B    is the distance between axis of rotation and bearing surface 13,
α    is the opening angle (= clamping angle) of the spiral,
$d_o$    is the largest shank width to be clamped,
n    is the number of revolutions (here = 0) and
φ    is the variable angle, which at the same time specifies the angular dimension of the part of the spiral usable as clamping surface.

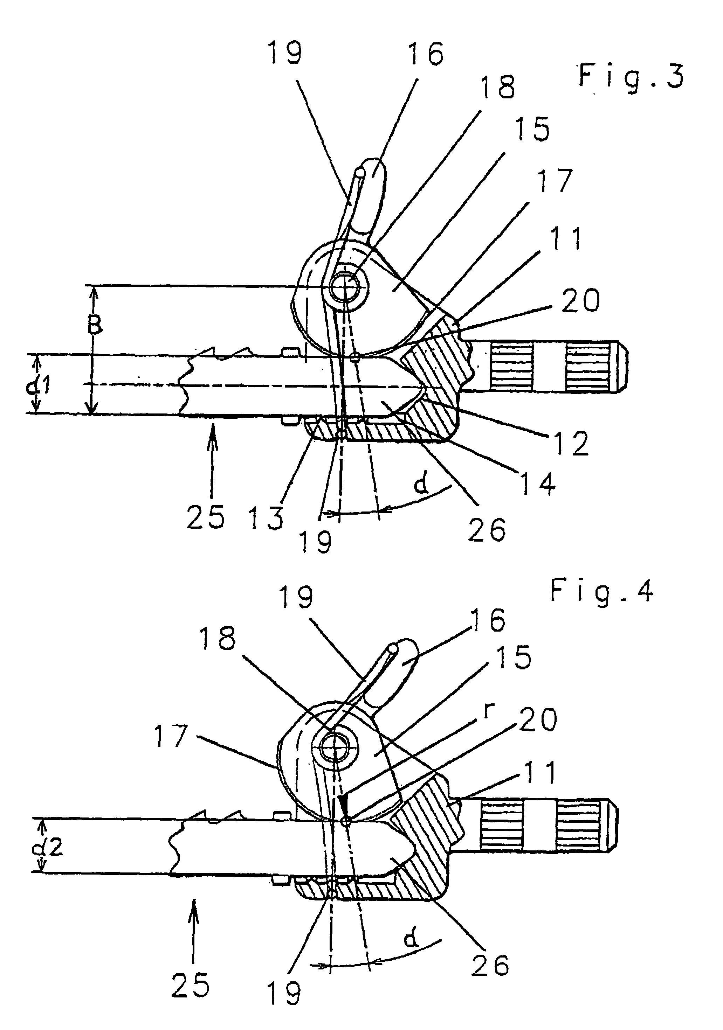

If the shank 26 of a compass saw blade 25 has been inserted into the saw blade clamp and the spiral clamping surface 17 has been brought into engagement with the narrow side of the shank 26, then, as shown especially in Figures 3 and 4, a contact point 20 is obtained between the clamping surface 17 and the narrow side of the shank 26. For all shank widths provided, this contact point 20 lies on a straight line running through the axis of rotation 18; this straight line forms, with a straight line through this axis of rotation running perpendicular to the bearing surface 13 and to the narrow side of the shank 26 of the compass saw blade 25 remote from the clamping surface 17, the same angle, namely the opening angle α of the spiral. To that end, in Figures 3 and 4 different shank widths are indicated, namely, in Figure 3 a relatively large shank width $d_1$, which is, for example, 7 mm, and in Figure 4 a smaller shank width $d_2$, which can be, for example, 6.4 mm. In both cases, the same angle α is obtained, which in the case illustrated is 10°. The same clamping conditions consequently obtain for all shank widths provided.

As illustrated, the clamping element 15 has an operating arm 16, and bearing against this is a spring 19, which is supported at its other end at the blade seat 11. This spring urges the clamping element 15 towards the clamping position illustrated in the Figures. To open the saw blade clamp, the user therefore displaces the operating arm 16 against the force of the spring 19, anticlockwise in the Figures, so that the clamping surface 17 comes away from the narrow side of the shank 26 of the inserted compass saw blade 25 and the blade can be removed from the blade clamp. If the operating arm 16 is released after another compass saw blade has been inserted, the spring 19 causes the clamping element 15 to pivot clockwise (in the Figures), and the clamping surface 17 is brought into the illustrated engagement with the narrow side of the shank of the inserted compass saw blade.

So that the compass saw blade is additionally located to prevent it from being tilted out of true under the action of the clamping surface 17, a groove is formed in the region of the clamping surface 17. The groove has a uniform depth over the extent of the spiral clamping surface and engages around the narrow side of the shank 26 of the inserted compass saw blade 25 approximately laterally, so that the compass saw blade is secured against tilting.

## Claims

1. Saw blade clamp for a compass saw or similar saw, having a blade seat (11), which comprises at least two adjacent bearing surfaces (14) for two adjacent, axially extending surfaces of the saw blade shank (26), and also a stop surface (12) for the rear end of the saw blade shank (26), and having a hand-operable clamping element (15), which is pivotable between a releasing position and a clamping position about an axis (18) and which comprises a clamping surface (17) extending eccentrically around the axis (18) for engagement with an axially extending surface of the saw blade shank (26), **characterised in that** the clamping surface (17) is in the form of a spiral, the opening angle ($\alpha$) of which lies between 4° and 12°.

2. Saw blade clamp according to claim 1, **characterised in that** the opening angle ($\alpha$) of the spiral lies between 8° and 11°, preferably at 10°.

3. Saw blade clamp according to claim 1 or 2, **characterised in that** the clamping element (15) is in the form of a two-armed lever, on one arm of which the clamping surface (17) is formed and the other arm of which forms an operating arm (16).

4. Saw blade clamp according to one of claims 1 to 3, **characterised in that** the clamping surface (17) is arranged to be brought into engagement with a narrow side of the inserted saw blade shank (26).

5. Saw blade clamp according to claim 4, **characterised in that** a groove of constant depth is moulded in the clamping surface (17).

6. Saw blade clamp according to one of claims 1 to 5, **characterised in that** the bearing surfaces (14) are part of a receiving slot open towards the side of the clamping surface (17).

7. Saw blade clamp according to one of claims 1 to 6, **characterised in that** the clamping element is spring-loaded in the direction of the clamping position.

## Patentansprüche

1. Sägeblatt-Spannvorrichtung für eine Stichsäge oder eine ähnliche Säge, mit einer Sägeblatt-Aufnahme (11), die zumindest zwei benachbarte Lagerflächen (14) für zwei benachbarte, axial verlaufende Flächen von dem Sägeblatt-Schaft (26) und außerdem eine Anschlagfläche (12) für das hintere Ende von dem Sägeblatt-Schaft (26) aufweist, und mit einem handbetätigbaren Spannelement (15), das zwischen einer Freigabeposition und einer Spannposition um eine Achse (18) schwenkbar ist und das eine Spannfläche (17) aufweist, die sich exzentrisch um die Achse (18) erstreckt, um mit einer axial verlaufenden Fläche des Sägeblatt-Schaftes (26) einzugreifen, **dadurch gekennzeichnet, daß** die Spannfläche (17) die Form einer Spirale hat, wobei der Öffnungswinkel ($\alpha$) davon zwischen 4° und 12° beträgt.

2. Sägeblatt-Spannvorrichtung nach Anspruch 1, **dadurch gekennzeichnet, daß** der Öffnungswinkel ($\alpha$) der Spirale zwischen 8° und 11° beträgt, vorzugsweise 10°.

3. Sägeblatt-Spannvorrichtung nach Anspruch 1 oder 2, **dadurch gekennzeichnet, daß** das Spannelement (15) die Form eines zweiarmigen Hebels hat, wobei an einem Arm davon die Spannfläche (17) ausgebildet ist und der andere Arm davon einen Betätigungsarm (16) bildet.

4. Sägeblatt-Spannvorrichtung nach einem der Ansprüche 1 bis 3, **dadurch gekennzeichnet, daß** die Spannfläche (17) dazu ausgestaltet ist, um mit einer schmalen Seite von dem eingesetzten Sägeblatt-Schaft (26) in Eingriff gebracht zu werden.

5. Sägeblatt-Spannvorrichtung nach Anspruch 4, **dadurch gekennzeichnet, daß** eine Nut mit konstanter Tiefe in der Spannfläche (17) geformt ist.

6. Sägeblatt-spannvorrichtung nach einem der Ansprüche 1 bis 5, **dadurch gekennzeichnet, daß** die Lagerflächen (14) Teil von einem Aufnahme-Schlitz sind, der in Richtung auf die Seite der Spannfläche (17) offen ist.

7. Sägeblatt-Spannvorrichtung nach einem der Ansprüche 1 bis 6, **dadurch gekennzeichnet, daß** das Spannelement in Richtung auf die Spannposition unter Federvorspannung steht.

**Revendications**

1. Un dispositif de serrage de lame de scie pour scie sauteuse ou pour une scie similaire ayant un siège de lame (11) qui comprend au moins deux surfaces d'appui adjacentes (14) pour recevoir deux surfaces adjacentes s'étendant axialement de la queue de lame de scie (26) et également une surface de butée (15) pour recevoir l'extrémité arrière de la queue de lame de scie (26) et ayant un élément de serrage à commande manuelle (15) qui est monté pivotant entre une position de libération et une position de serrage autour d'un axe (18) et qui comprend une surface de serrage (17) s'étendant excentriquement autour de l'axe (18) pour venir s'engager contre une surface s'étendant axialement de la queue de lame de scie (26), **caractérisé en ce que** la surface de serrage (17) est réalisée sous la forme d'une spirale dont l'angle d'ouverture ($\alpha$) est compris entre 4° et 12°.

2. Dispositif de serrage de lame de scie selon la revendication 1, **caractérisé en ce que** l'angle d'ouverture ($\alpha$) de la spirale est compris entre 8° et 11° et est, de préférence, de 10°.

3. Dispositif de serrage de lame de scie selon la revendication 1 ou 2, **caractérisé en ce que** l'élément de serrage (15) est réalisé sous la forme d'un levier à deux bras sur l'un desquels est formée la surface de serrage (17) et dont l'autre forme un bras de commande (16).

4. Dispositif de serrage de lame de scie selon l'une des revendications 1 à 3, **caractérisé en ce que** la surface de serrage (17) est agencée de façon à être amenée en engagement avec un côté étroit de la queue de lame de scie insérée (26)

5. Dispositif de serrage de lame de scie selon la revendication 4, **caractérisé en ce qu'**une rainure de profondeur constante est moulée dans la surface de serrage (17).

6. Dispositif de serrage de lame de scie selon l'une des revendications 1 à 5, **caractérisé en ce que** les surfaces d'appui (14) font partie d'une fente réceptrice ouverte en direction du côté de la surface de serrage (17).

7. Dispositif de serrage de lame de scie selon l'une des revendications 1 à 6, **caractérisé en ce que** l'élément de serrage est chargé par ressort en direction de la position de serrage.

Fig.1

Fig.2

Fig.3

Fig.4